# EUROPEAN PATENT APPLICATION

(11) **EP 4 836 421 A1**
(43) Date of publication of application: **04.11.2026**
(21) Application number: 24910274.0
(22) Date of filing: 30.10.2024
(51) Int. Cl.: H04N 21/234

(54) **VIDEO PROCESSING METHOD AND APPARATUS, ELECTRONIC DEVICE, MEDIUM, AND PRODUCT**

(30) Priority: 29.12.2023 CN 202311873330
(71) Applicant: BEIJING YOUZHUJU NETWORK TECHNOLOGY CO. LTD., Beijing 101299 (CN)
(72) Inventor: ZHANG, Hongyang, Beijing 100028 (CN)
(74) Representative: Isarpatent
(86) International application number: PCT/CN2024/128607
(87) International publication number: WO 2025/139336

(57) **Abstract**

Embodiments of the present disclosure disclose a video processing method and apparatus, an electronic device, a storage medium, and a product. The method includes: obtaining a video to be processed that corresponds to target live video stream data, in response to a video obtaining operation; determining a recommended object corresponding to the video to be processed based on object feature information corresponding to the video to be processed; and generating a recommended video corresponding to the recommended object based on interactive feature information corresponding to the video to be processed, where the interactive feature information is feature information related to the recommended object in the video to be processed.

## Description

### CROSS-REFERENCE TO RELATED APPLICATION(S)

The present application claims priority to Chinese Patent Application No. 202311873330.7, filed on December 29, 2023 and entitled "VIDEO PROCESSING METHOD AND APPARATUS, ELECTRONIC DEVICE, MEDIUM, AND PRODUCT", which is incorporated herein by reference in its entirety.

### FIELD

Embodiments of the present disclosure relate to the field of video processing technologies, and in particular to a video processing method and an apparatus, an electronic device, a medium, and a product.

### BACKGROUND

During e-commerce live streaming, a live streaming user usually needs to replay demonstration video clips of products, so that a consumer user watching the live stream can learn about demonstration information of the related products. To attract more consumer users' attention to products being sold in the live stream, the live streaming user further wants to be able to edit and post the demonstration video clips of the products during the live streaming.

### SUMMARY

The present disclosure provides a video processing method and apparatus, an electronic device, a medium, and a product, which allow for automatically selecting a video to be processed of a recommended object for editing to obtain a recommended video including interactive feature information of the recommended object, thereby improving the processing efficiency of live streaming video data.

According to a first aspect, an embodiment of the present disclosure provides a video processing method. The method includes:
obtaining a video to be processed that corresponds to target live video stream data, in response to a video obtaining operation;
determining a recommended object corresponding to the video to be processed based on object feature information corresponding to the video to be processed; and
generating a recommended video corresponding to the recommended object based on interactive feature information corresponding to the video to be processed, where the interactive feature information is feature information related to the recommended object in the video to be processed.

According to a second aspect, an embodiment of the present disclosure further provides a video processing apparatus. The apparatus includes:
a video processing object obtaining module configured to obtain a video to be processed that corresponds to target live video stream data, in response to a video obtaining operation;
a video-associated object determination module configured to determine a recommended object corresponding to the video to be processed based on object feature information corresponding to the video to be processed; and
a video processing module configured to generate a recommended video corresponding to the recommended object based on interactive feature information corresponding to the video to be processed, where the interactive feature information is feature information related to the recommended object in the video to be processed.

According to a third aspect, an embodiment of the present disclosure further provides an electronic device. The electronic device includes:
one or more processors; and
a storage means configured to store one or more programs, where
the one or more programs, when executed by the one or more processors, cause the one or more processors to implement the video processing method according to any one of the embodiments of the present disclosure.

According to a fourth aspect, an embodiment of the present disclosure further provides a storage medium containing computer-executable instructions, where the computer-executable instructions, when executed by a processor of a computer, are configured for performing the video processing method according to any one of the embodiments of the present disclosure.

According to a fifth aspect, an embodiment of the present disclosure further provides a computer program product, where the computer program product includes a computer program that, when executed by a processor, causes the video processing method according to any one of the embodiments of the present disclosure to be implemented.

In embodiments of the present disclosure, a video to be processed that corresponds to target live video stream data is obtained in response to a video obtaining operation; a recommended object corresponding to the video to be processed is determined based on object feature information corresponding to the video to be processed; and a recommended video corresponding to the recommended object is generated based on interactive feature information corresponding to the video to be processed, where the interactive feature information is feature information related to the recommended object in the video to be processed.

### BRIEF DESCRIPTION OF THE DRAWINGS

The foregoing and other features, advantages, and aspects of embodiments of the present disclosure become clearer with reference to the following specific implementations and accompanying drawings. Throughout the accompanying drawings, the same or similar reference numerals denote the same or similar elements. It should be understood that the accompanying drawings are schematic and that parts and elements are not necessarily drawn to scale.
FIG. 1 is a schematic flowchart of a video processing method according to an embodiment of the present disclosure;
FIG. 2 is a schematic flowchart of a video processing method according to an embodiment of the present disclosure;
FIG. 3 is a schematic flowchart of a video processing method according to an embodiment of the present disclosure;
FIG. 4 is a schematic structural diagram of a video processing apparatus according to an embodiment of the present disclosure; and
FIG. 5 shows a schematic structural diagram of an electronic device according to an embodiment of the present disclosure.

### DETAILED DESCRIPTION OF EMBODIMENTS

Embodiments of the present disclosure will be described in more detail below with reference to the drawings. Although some embodiments of the present disclosure are shown in the drawings, it should be understood that the present disclosure may be implemented in various forms and should not be construed as being limited to the embodiments set forth herein. Rather, these embodiments are provided for a more thorough and complete understanding of the present disclosure. It should be understood that the drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include" and variants thereof used herein indicate open inclusion, that is, "include but are not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different means, modules, or units, and are not used to limit the sequence of functions performed by these means, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

In an alternative but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the abovementioned process of notifying and obtaining the authorization of the user is only illustrative and does not constitute a limitation on the implementations of the present disclosure, and other manners that satisfy the relevant laws and regulations may also be applied in the implementations of the present disclosure.

It can be understood that the data involved in the technical solutions (including, but not limited to, the data itself and the access to or use of the data) shall comply with the requirements of corresponding laws, regulations, and relevant provisions.

During e-commerce live streaming, a live streaming user usually needs to replay demonstration video clips of products, so that a consumer user watching the live stream can learn about demonstration information of the related products. To attract more consumer users' attention to products being sold in the live stream, the live streaming user further wants to be able to edit and post the demonstration video clips of the products during the live streaming. However, manual video editing during live streaming is costly, and it is difficult to perform video editing on demonstration clips in the live stream in real time, resulting in low video editing efficiency.

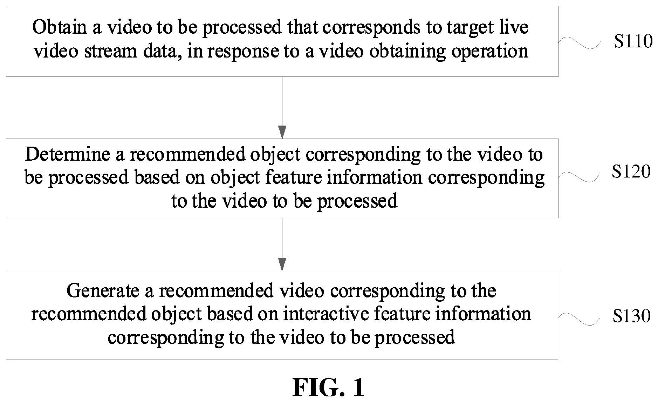

FIG. 1 is a schematic flowchart of a video processing method according to an embodiment of the present disclosure. This embodiment of the present disclosure is applicable to a scenario of processing live video stream data, particularly editing live video stream data. The method may be performed by a video processing apparatus. The apparatus may be implemented in the form of software and/or hardware, and optionally, the video processing apparatus may be implemented by an electronic device. The electronic device may be a mobile terminal, a PC terminal, a server, or the like.

As shown in FIG. 1, the video processing method includes the following steps.

S110: A video to be processed that corresponds to target live video stream data is obtained, in response to a video obtaining operation.

The target live video stream data may be live video stream pushing data from a live room of a user (account) on any video platform. The target live video stream data may be data continuously pushed by a live streaming client during a live stream, or may be replay video data generated after the live stream ends.

The video obtaining operation may be a video obtaining operation input by the user to obtain a video to be processed. Alternatively, the video obtaining operation may be an operation identifier recognized based on content of the live video stream data, to trigger obtaining of a video clip.

In a feasible implementation, obtaining the video to be processed that corresponds to the target live video stream data, in response to the video obtaining operation, may be: obtaining a demonstration video clip corresponding to a target object in the target live video stream data in response to a demonstration operation for the target object. The demonstration video clip corresponding to the target object may be used as the video to be processed. A video-related object corresponding to the video to be processed is the target object. For example, during a live stream, when a streamer demonstrates the target object and needs to replay the demonstration clip of the target object, the streamer may click to trigger a demonstration button to start recording the live demonstration process, thereby obtaining the demonstration video clip corresponding to the target object in the target live video stream data.

S120: A recommended object corresponding to the video to be processed is determined based on object feature information corresponding to the video to be processed.

The object feature information may be feature information in the video stream to be processed that can represent a content object in the video to be processed, for example, feature information such as a name, an image, and a functional feature of the content object in the video stream to be processed.

Specifically, one video to be processed corresponds to one recommended object. By recognizing a video frame and speech text in live video stream data of the video to be processed, it may be determined whether object feature information of a content object in the video image frame and object feature information of a corresponding content object in the speech text are the same. If yes, a recommended object corresponding to the video to be processed may be determined.

The recommended object may be one or more content objects presented and described in the target live video stream data. The recommended object may be a physical recommended object or a virtual recommended object. In e-commerce live streaming or item sharing and promotion scenarios, the recommended object is one or more recommended objects with user demand that are presented and demonstrated during a live stream. A user receiving the target live video stream data may learn about the recommended object based on the video to be processed of the recommended object, thereby satisfying their demand for the recommended object.

In an implementation, the video to be processed is obtained by obtaining the demonstration video clip corresponding to the target object in the target live video stream data in response to the demonstration operation for the target object. If the recommended object corresponding to the video to be processed is different from the target object, the video-related object corresponding to the video to be processed is switched to the recommended object determined based on the object feature information in this step.

S130: A recommended video corresponding to the recommended object is generated based on interactive feature information corresponding to the video to be processed.

The interactive feature information is feature information related to the recommended object in the video to be processed.

In this embodiment, video editing performed on the video to be processed may be a video processing operation spontaneously performed by the video processing apparatus. Automatic running of the corresponding video editing function can be triggered upon completion of receiving the video stream data of the video to be processed.

It can be understood that, in this embodiment, the recommended video corresponding to the recommended object is generated essentially based on the interactive feature information. Content not directly related to the recommended object is removed from the video to be processed of the recommended object, retaining content describing features of the recommended object, particularly content capable of illustrating advantages of the recommended object. Finally, a short video meeting a duration threshold condition is generated based on the retained video stream data. That is, based on the relatively long video to be processed of the recommended object, a "information-rich" short video about the recommended object is generated, which is concise but highlights key points. This allows a user who views the short video to learn about characteristics of the recommended object in a short time.

In a feasible implementation, in order to avoid an information gap caused by changes in some feature information of the recommended item, during processing of the video to be processed, description content of object feature information that changes over time may further be filtered out from description content related to the recommended object.

The above-described video processing process may be implemented by invoking a preset video editing function plugin.

In the technical solution of this embodiment of the present disclosure, a video to be processed that corresponds to target live video stream data is obtained in response to a video obtaining operation; a recommended object corresponding to the video to be processed is determined based on object feature information corresponding to the video to be processed; and a recommended video corresponding to the recommended object is generated based on interactive feature information corresponding to the video to be processed, where the interactive feature information is feature information related to the recommended object in the video to be processed. The technical solution of this embodiment of the present disclosure solves the problem of low efficiency in editing live streaming video clips during a live stream. A video to be processed of a recommended object can be automatically selected for editing, so as to obtain a recommended video containing interactive feature information of the recommended object, thereby improving the processing efficiency of live streaming video clips and further reducing operation costs of a live streaming user.

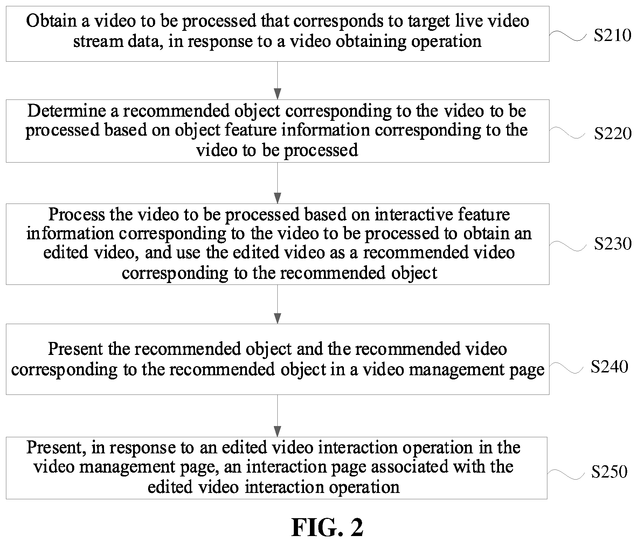

FIG. 2 is a schematic flowchart of another video processing method according to an embodiment of the present disclosure. Based on the foregoing embodiment, the process of obtaining a recommended video is further illustrated. The method may be performed by a video processing apparatus. The apparatus may be implemented in the form of software and/or hardware, and optionally, by an electronic device. The electronic device may be a mobile terminal, a PC terminal, a server, or the like.

As shown in FIG. 2, the video processing method includes the following steps.

S210: A video to be processed that corresponds to target live video stream data is obtained, in response to a video obtaining operation.

S220: A recommended object corresponding to the video to be processed is determined based on object feature information corresponding to the video to be processed.

S230: The video to be processed is processed based on interactive feature information corresponding to the video to be processed to obtain an edited video, and the edited video is used as a recommended video corresponding to the recommended object.

Specifically, during the process of obtaining the edited video, video data filtering may be performed on the video to be processed based on the interactive feature information to obtain a video clip containing feature information related to the recommended object. Then, an edited video with the recommended object as an object presented in video images is generated based on the video clip.

The interactive feature information specifically includes at least one of object attribute information of the recommended object, business interaction attribute information, or image quality attribute information.

The object attribute information may refer to inherent features of the recommended object, for example, feature information of the recommended object such as functional features, appearance features, and performance parameters during functional implementation. For example, when the recommended object is an article of clothing, the object attribute information may include fabric material, size, suitable demographics, clothing style, design features, brand, etc. Object attribute features of the recommended object in any describable dimension are possible.

The business interaction attribute information may be information such as a live stream time period corresponding to the video to be processed, item demand for the recommended object, and the number of interaction messages and the number of viewers in the live room during the live stream, which can to some extent reflect the level of demand for the recommended object.

The image quality attribute information may be preset parameter information for image quality analysis, such as image clarity, resolution, texture blur, noise, and other parameter information. In addition, an analysis result of visual coherence between image frames of the video to be processed may further be determined. The visual coherence analysis may include an analysis result of at least one of coherence of positions of a person in the image frames, coherence of camera angles, coherence of shot sizes, coherence of actions in the image frames, coherence of subject orientation in the image frames, coherence of the line of sight in the image frames, or coherence of lighting conditions in the image frames.

During the video data filtering on the video to be processed based on the interactive feature information, video clips containing as much object attribute information as possible, with good image quality and strong business interactivity, may be selected.

S240: The recommended object and the recommended video corresponding to the recommended object are presented in a video management interface.

To facilitate interaction with the recommended video, the recommended video and the recommended object may be presented in an associated manner in the video management interface. In the video management interface, management may be performed on recommended videos, such as filtering, sorting, or editing of the recommended videos. In addition, related information of the recommended objects may further be obtained.

S250: In response to an edited video interaction operation in the video management interface, an interaction interface associated with the edited video interaction operation is presented.

The edited video interaction operation includes at least one of video editing, video download, or video posting.

Specifically, a user may perform manual editing on the recommended video that is automatically generated based on the video to be processed. When the video editing interaction operation is executed, a video editing interface may be presented with the recommended video as an editing object.

When the video download interaction operation is executed, the recommended video may be downloaded to a specified storage location.

When the video posting interaction operation is executed, the recommended video may be posted to a video platform corresponding to an account associated with the target live video stream data.

In the technical solution of this embodiment of the present disclosure, a video to be processed that corresponds to target live video stream data is obtained in response to a video obtaining operation; a recommended object corresponding to the video to be processed is determined based on object feature information corresponding to the video to be processed; the video to be processed is processed based on the interactive feature information corresponding to the video to be processed to obtain an edited video, and the edited video is used as the recommended video corresponding to the recommended object; the recommended object and the recommended video corresponding to the recommended object are presented in a video management interface; and in response to an edited video interaction operation in the video management interface, an interaction interface associated with the edited video interaction operation is presented. The technical solution of this embodiment of the present disclosure solves the problem of low efficiency in editing live streaming video clips during a live stream. A video to be processed of a recommended object can be automatically selected for editing, thereby improving the processing efficiency of live streaming video clips. Further, interaction operations can be further performed on the recommended video, thereby further reducing video processing costs of a live streaming user.

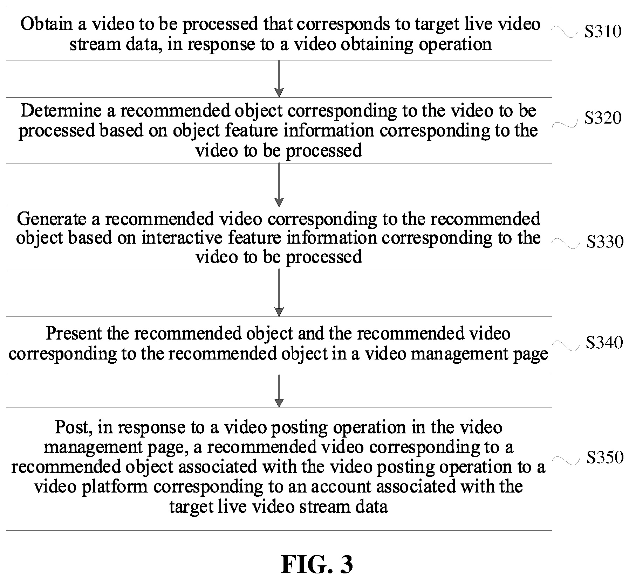

FIG. 3 is a schematic flowchart of a video processing method according to an embodiment of the present disclosure. Based on the foregoing embodiments, the process of posting an edited recommended video is further illustrated. The method may be performed by a video processing apparatus. The apparatus may be implemented in the form of software and/or hardware, and optionally, by an electronic device. The electronic device may be a mobile terminal, a PC terminal, a server, or the like.

As shown in FIG. 3, the video processing method includes the following steps.

S310: A video to be processed that corresponds to target live video stream data is obtained, in response to a video obtaining operation.

S320: A recommended object corresponding to the video to be processed is determined based on object feature information corresponding to the video to be processed.

S330: A recommended video corresponding to the recommended object is generated based on interactive feature information corresponding to the video to be processed.

The interactive feature information is feature information related to the recommended object in the video to be processed.

During the process of performing video editing on any video to be processed to generate a recommended video, when editing fails due to video editing timeout or poor network conditions, re-editing of the video to be processed may be performed or the video to be processed may be discarded.

S340: The recommended object and the recommended video corresponding to the recommended object are presented in a video management interface.

S350: In response to a video posting operation in the video management interface, a recommended video corresponding to a recommended object associated with the video posting operation is posted to a video platform corresponding to an account associated with the target live video stream data.

In the case that the recommended object corresponds to a plurality of recommended videos, in response to the video posting operation, a target recommended video is determined from the plurality of recommended videos, and the target recommended video is posted to the video platform corresponding to the account associated with the target live video stream data.

Generally, during a live stream, there are multiple repeated demonstrations of the recommended object. The content and duration of each demonstration may be the same or different. Therefore, a plurality of videos to be processed of the recommended object may be obtained from the target live video stream data, and accordingly, a plurality of recommended videos may be automatically generated based on the plurality of videos to be processed. Editing quality analysis may be performed respectively on the plurality of recommended videos based on interactive feature information associated with the recommended object and contained in each of the plurality of recommended videos, to obtain respective editing quality scores, and a recommended video corresponding to a highest one of the editing quality scores is used as the target recommended video. It can be understood that a highest editing quality score corresponds to the recommended video containing the most interactive feature information of the recommended object.

The posting of the recommended short video of the recommended object functions to promote and publicize the recommended object, thereby encouraging an interested user to further explore and learn about the recommended object. If a live room from which live demonstration video clips of the recommended object are generated is still in the process of live streaming, a user with demand for the recommended object may also enter the corresponding live room to obtain additional video stream data. In this embodiment, after being automatically edited, the video to be processed of the recommended object may further be automatically posted to improve the item promotion efficiency of the corresponding live streaming user and reduce labor costs.

In an optional implementation, to optimize the rendering and presentation effect of the recommended video, additional content such as a cover, subject content, and image effects may be added to the recommended video. For example, before the recommended video is posted, a target video frame (e.g., a frame where the recommended object occupies the largest proportion of the video frame or presents the most comprehensive item features) may be selected from the recommended video as a video cover. Then, text information and/or image effects associated with the recommended object may be added to the video cover to obtain a target video cover. Finally, the target video cover may be added to the recommended video to obtain the target recommended video to be posted.

In the technical solution of this embodiment of the present disclosure, a video to be processed that corresponds to target live video stream data is obtained in response to a video obtaining operation; a recommended object corresponding to the video to be processed is determined based on object feature information corresponding to the video to be processed; a recommended video corresponding to the recommended object is generated based on interactive feature information corresponding to the video to be processed, where the interactive feature information is feature information related to the recommended object in the video to be processed; the recommended object and the recommended video corresponding to the recommended object are presented in a video management interface; and in response to a video posting operation in the video management interface, a recommended video corresponding to a recommended object associated with the video posting operation is posted to a video platform corresponding to an account associated with the target live video stream data. The technical solution of this embodiment of the present disclosure solves the problem of low efficiency in editing and posting live streaming video clips during a live stream. An editing and posting function for live streaming demonstration videos can be provided for a user, so that a video to be processed of a recommended object can be automatically selected for editing according to user requirements, thereby improving the processing efficiency of live streaming video clips. Further, the best of the edited short videos can be automatically selected and posted according to user requirements, thereby increasing the attention to the recommended object.

In a feasible implementation, an automatically posted video management interface may be configured. In the interface, a list of all automatically posted recommended videos may be presented, and the posting status, the posting time, the video type, the associated recommended object, the number of video views, and other information of each recommended video may also be presented. The automatically posted video management interface may further be provided with functional controls for short video download, video editing, video deletion, video posting scope modification, etc. When the live streaming user performs a management operation on the automatically posted short videos, the corresponding video management operation may be implemented through one of these functional controls. When a video editing functional control is triggered, the video processing apparatus may obtain a video re-editing instruction, and in response to the video re-editing instruction, invoke a video editing function plugin to present a video editing interface with a target demonstration short video as an editing object.

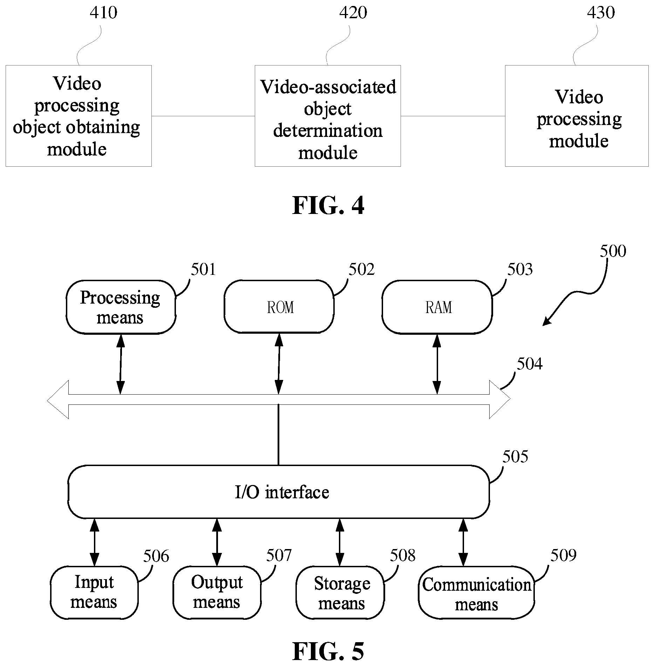

FIG. 4 illustrates a video processing apparatus according to an embodiment of the present disclosure. The apparatus is applicable to a scenario of processing live video stream data, particularly editing live video stream data. The video processing apparatus may be implemented in the form of software and/or hardware, and may be configured in an electronic device. The electronic device may be a mobile terminal, a PC terminal, a server, or the like.

As shown in FIG. 4, the video processing apparatus includes: a video processing object obtaining module 410, a video-associated object determination module 420, and a video processing module 430.

The video processing object obtaining module 410 is configured to obtain a video to be processed that corresponds to target live video stream data, in response to a video obtaining operation. The video-associated object determination module 420 is configured to determine a recommended object corresponding to the video to be processed based on object feature information corresponding to the video to be processed. The video processing module 430 is configured to generate a recommended video corresponding to the recommended object based on interactive feature information corresponding to the video to be processed, where the interactive feature information is feature information related to the recommended object in the video to be processed.

In the technical solution of this embodiment of the present disclosure, a video to be processed that corresponds to target live video stream data is obtained in response to a video obtaining operation; a recommended object corresponding to the video to be processed is determined based on object feature information corresponding to the video to be processed; and a recommended video corresponding to the recommended object is generated based on interactive feature information corresponding to the video to be processed, where the interactive feature information is feature information related to the recommended object in the video to be processed. The technical solution of this embodiment of the present disclosure solves the problem of low efficiency in editing live streaming video clips during a live stream. A video to be processed of a recommended object can be automatically selected for editing, so as to obtain a recommended video containing interactive feature information of the recommended object, thereby improving the processing efficiency of live streaming video clips and further reducing operation costs of a live streaming user.

In an optional implementation, the video processing object obtaining module 410 may be configured to:
obtain a demonstration video clip corresponding to a target object in the target live video stream data in response to a demonstration operation for the target object, and use the demonstration video clip corresponding to the target object as the video to be processed, where a video-related object corresponding to the video to be processed is the target object.

The video-associated object determination module 420 may be further configured to:
switch the video-related object corresponding to the video to be processed to the recommended object corresponding to the video to be processed, in response to the recommended object being different from the target object.

In an optional implementation, the video processing module 430 may be configured to:
process the video to be processed based on the interactive feature information corresponding to the video to be processed to obtain an edited video, and use the edited video as the recommended video corresponding to the recommended object.

In an optional implementation, the video processing module 430 may be configured to:
perform video data filtering on the video to be processed based on the interactive feature information, to obtain a video clip containing feature information related to the recommended object; and
generate, based on the video clip, an edited video with the recommended object as an object presented in video images,
where the interactive feature information includes at least one of object attribute information of the recommended object, business interaction attribute information, or image quality attribute information.

In an optional implementation, the video processing apparatus further includes a video presentation module. The video presentation module is configured to:
present the recommended object and the recommended video corresponding to the recommended object in a video management interface.

In an optional implementation, the video processing apparatus further includes an edited video interaction module. The edited video interaction module is configured to: present, in response to an edited video interaction operation in the video management interface, an interaction interface associated with the edited video interaction operation, where the edited video interaction operation includes at least one of video editing, video download, or video posting.

In an optional implementation, the video processing apparatus further includes an edited video interaction module. The edited video interaction module is configured to:
post, in response to a video posting operation in the video management interface, a recommended video corresponding to a recommended object associated with the video posting operation to a video platform corresponding to an account associated with the target live video stream data.

In an optional implementation, the video processing apparatus further includes an edited video interaction module. The edited video interaction module may be further configured to:
in the case that the recommended object corresponds to a plurality of recommended videos, in response to the video posting operation, determine a target recommended video from the plurality of recommended videos, and post the target recommended video to the video platform corresponding to the account associated with the target live video stream data.

In an optional implementation, the video processing apparatus further includes an edited video interaction module. The edited video interaction module may be further configured to:
perform editing quality analysis respectively on the plurality of recommended videos based on interactive feature information associated with the recommended object and contained in each of the plurality of recommended videos, to obtain respective editing quality scores, and use a recommended video corresponding to a highest one of the editing quality scores as the target recommended video.

The video processing apparatus provided in this embodiment of the present disclosure can perform the video processing method provided in any of the embodiments of the present disclosure, and has corresponding functional modules and beneficial effects for performing the method.

It is worth noting that the units and modules included in the above apparatus are obtained through division merely according to functional logic, but are not limited to the above division, as long as corresponding functions can be implemented. In addition, specific names of the functional units are merely used for mutual distinguishing, and are not used to limit the scope of protection of the embodiments of the present disclosure.

FIG. 5 is a schematic structural diagram of an electronic device according to an embodiment of the present disclosure. Reference is made to FIG. 5 below, which is a schematic structural diagram of an electronic device (such as a terminal device or a server in FIG. 5) 500 suitable for implementing embodiments of the present disclosure. A terminal device in this embodiment of the present disclosure may include, but is not limited to, mobile terminals such as a mobile phone, a notebook computer, a digital broadcast receiver, a personal digital assistant (PDA), a PAD (tablet computer), a portable multimedia player (PMP), and a vehicle-mounted terminal (e.g., a vehicle navigation terminal), and fixed terminals such as a digital TV and a desktop computer. The electronic device shown in FIG. 5 is merely an example, and shall not impose any limitation on the function and scope of use of the embodiments of the present disclosure.

As shown in FIG. 5, the electronic device 500 may include a processing means (for example, a central processing unit or a graphics processing unit) 501 that may perform a variety of appropriate actions and processing in accordance with a program stored in a read-only memory (ROM) 502 or a program loaded from a storage means 508 into a random-access memory (RAM) 503. The RAM 503 further stores various programs and data required for the operation of the electronic device 500. The processing means 501, the ROM 502, and the RAM 503 are connected to one another through a bus 504. An input/output (I/O) interface 505 is also connected to the bus 504.

Generally, the following means may be connected to the I/O interface 505: an input means 506 including, for example, a touchscreen, a touchpad, a keyboard, a mouse, a camera, a microphone, an accelerometer, and a gyroscope; an output means 507 including, for example, a liquid crystal display (LCD), a speaker, and a vibrator; the storage means 508 including, for example, a magnetic tape and a hard disk drive; and a communication means 509. The communication means 509 may allow the electronic device 500 to perform wireless or wired communication with other devices to exchange data. Although FIG. 5 shows the electronic device 500 having various means, it should be understood that it is not required to implement or have all of the shown means. It may be an alternative to implement or have more or fewer means.

In particular, according to the embodiments of the present disclosure, the process described above with reference to the flowchart may be implemented as a computer software program. For example, an embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network through the communication means 509, installed from the storage means 508, or installed from the ROM 502. When the computer program is executed by the processing means 501, the abovementioned functions defined in the method of the embodiments of the present disclosure are performed.

The names of messages or information exchanged between a plurality of means in the implementations of the present disclosure are used for illustrative purposes only, and are not used to limit the scope of these messages or information.

The electronic device provided in an embodiment of the present disclosure and the video processing method provided in the above-mentioned embodiments belong to the same inventive concept. For the technical details not exhaustively described in this embodiment, reference may be made to the above-mentioned embodiments, and this embodiment and the above-mentioned embodiments have the same beneficial effects.

An embodiment of the present disclosure further provides a computer storage medium having stored thereon a computer program that, when executed by a processor, causes the video processing method according to the above embodiments to be implemented.

It should be noted that the abovementioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

In some implementations, a client and a server may communicate using any currently known or future-developed network protocol such as the Hypertext Transfer Protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The abovementioned computer-readable medium may be included in the abovementioned electronic device. Alternatively, the computer-readable medium may exist independently, without being assembled into the electronic device.

The computer-readable medium carries one or more programs that, when executed by the electronic device, cause the electronic device to:
obtain a video to be processed that corresponds to target live video stream data, in response to a video obtaining operation;
determine a recommended object corresponding to the video to be processed based on object feature information corresponding to the video to be processed; and
generate a recommended video corresponding to the recommended object based on interactive feature information corresponding to the video to be processed, where the interactive feature information is feature information related to the recommended object in the video to be processed.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

An embodiment of the present disclosure further provides a computer program product including a computer program that, when executed by a processor, causes the video processing method according to any one of the embodiments of the present disclosure to be implemented.

During implementation of the computer program product, computer program code for performing operations of the present disclosure can be written in one or more programming languages or a combination thereof. The programming languages include object-oriented programming languages such as Java, Smalltalk, and C++, and further include conventional procedural programming languages such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with an Internet service provider).

The abovementioned descriptions are merely preferred embodiments of the present disclosure and explanations of the applied technical principles. Those skilled in the art should understand that the scope of disclosure involved in the present disclosure is not limited to the technical solutions formed by specific combinations of the abovementioned technical features, and shall also cover other technical solutions formed by any combination of the abovementioned technical features or equivalent features thereof without departing from the abovementioned disclosed concept. For example, a technical solution formed by a replacement of the abovementioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the abovementioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. A video processing method, comprising:
obtaining a video to be processed that corresponds to target live video stream data, in response to a video obtaining operation;
determining a recommended object corresponding to the video to be processed based on object feature information corresponding to the video to be processed; and
generating a recommended video corresponding to the recommended object based on interactive feature information corresponding to the video to be processed, wherein the interactive feature information is feature information related to the recommended object in the video to be processed.

2. The method according to claim 1, wherein obtaining the video to be processed that corresponds to the target live video stream data, in response to the video obtaining operation, comprises:
obtaining a demonstration video clip corresponding to a target object in the target live video stream data in response to a demonstration operation for the target object, and using the demonstration video clip corresponding to the target object as the video to be processed, wherein a video-related object corresponding to the video to be processed is the target object; and
the method further comprises:
switching the video-related object corresponding to the video to be processed to the recommended object corresponding to the video to be processed, in response to the recommended object being different from the target object.

3. The method according to claim 1, wherein generating the recommended video corresponding to the recommended object based on the interactive feature information corresponding to the video to be processed comprises:
processing the video to be processed based on the interactive feature information corresponding to the video to be processed to obtain an edited video, and using the edited video as the recommended video corresponding to the recommended object.

4. The method according to claim 3, wherein processing the video to be processed based on the interactive feature information corresponding to the video to be processed to obtain the edited video comprises:
performing video data filtering on the video to be processed based on the interactive feature information, to obtain a video clip containing feature information related to the recommended object; and
generating, based on the video clip, an edited video with the recommended object as an object presented in video images,
wherein the interactive feature information comprises at least one of object attribute information of the recommended object, business interaction attribute information, or image quality attribute information.

5. The method according to claim 1, further comprising:
presenting the recommended object and the recommended video corresponding to the recommended object in a video management interface.

6. The method according to claim 5, further comprising:
presenting, in response to an edited video interaction operation in the video management interface, an interaction interface associated with the edited video interaction operation, wherein the edited video interaction operation comprises at least one of video editing, video download, or video posting.

7. The method according to claim 6, further comprising:
posting, in response to a video posting operation in the video management interface, a recommended video corresponding to a recommended object associated with the video posting operation to a video platform corresponding to an account associated with the target live video stream data.

8. The method according to claim 7, further comprising:
in a case that the recommended object corresponds to a plurality of recommended videos, in response to the video posting operation, determining a target recommended video from the plurality of recommended videos, and posting the target recommended video to the video platform corresponding to the account associated with the target live video stream data.

9. The method according to claim 8, wherein determining the target recommended video from the plurality of recommended videos comprises:
performing editing quality analysis respectively on the plurality of recommended videos based on interactive feature information associated with the recommended object and contained in each of the plurality of recommended videos, to obtain respective editing quality scores, and using a recommended video corresponding to a highest one of the editing quality scores as the target recommended video.

10. A video processing apparatus, comprising:
a video processing object obtaining module configured to obtain a video to be processed that corresponds to target live video stream data, in response to a video obtaining operation;
a video-associated object determination module configured to determine a recommended object corresponding to the video to be processed based on object feature information corresponding to the video to be processed; and
a video processing module configured to generate a recommended video corresponding to the recommended object based on interactive feature information corresponding to the video to be processed, wherein the interactive feature information is feature information related to the recommended object in the video to be processed.

11. An electronic device, comprising:
one or more processors; and
a storage means configured to store one or more programs, wherein
the one or more programs, when executed by the one or more processors, cause the one or more processors to implement the video processing method according to any of claims 1 to 9.

12. A computer-readable storage medium having a computer program stored thereon, wherein the program, when executed by a processor, causes the video processing method according to any of claims 1 to 9 to be implemented.

13. A computer program product comprising a computer program that, when executed by a processor, causes the video processing method according to any of claims 1 to 9 to be implemented.
